# EUROPEAN PATENT SPECIFICATION

(11) **EP 3 090 943 B1**
(45) Date of publication and mention of the grant of the patent: **11.04.2018**
(21) Application number: 16168399.0
(22) Date of filing: 04.05.2016
(51) Int. Cl.: B64C 25/36

(54) **LANDING GEAR INCLUDING A BOGIE BEAM ASSEMBLY AND METHOD FOR COUPLING AN AXLE TO A BOGIE BEAM THEREOF**
FAHRWERK MIT EINER DREHGESTELLTRÄGERANORDNUNG UND VERFAHREN ZUR KOPPLUNG EINER ACHSE AN EINEM DREHGESTELLTRÄGER DAVON
TRAIN D'ATTERRISSAGE COMPORTANT UN ENSEMBLE DE BALANCIERS DE BOGIE ET PROCÉDÉ DE COUPLAGE D'UN ESSIEU À UN BALANCIER DE BOGIE DE CELUI-CI

(30) Priority: 05.05.2015 US 201562157228 P; 13.08.2015 US 201514826009
(43) Date of publication of application: 09.11.2016
(73) Proprietor: Goodrich Corporation, Charlotte, NC 28217-4578 (US)
(72) Inventor: BAIRD, Bradley W., Grimsby, Ontario L3M 5C6 (CA); DAMBRAUSKAS, Paulius, Bradford, Ontario L3Z 2X8 (CA); WU, Yaping, Strongsville, OH Ohio 44136 (US)
(74) Representative: Bridge, Kerry Ann

(56) References cited:
- EP-A1- 2 635 490
- EP-A1- 2 663 490
- US-A- 2 865 228

## Description

### FIELD

The present disclosure relates to landing gear and more particularly, to a landing gear including a bogie beam assembly and method for coupling an axle to a bogie beam thereof.

### BACKGROUND

Landing gear supports an aircraft while the aircraft is on the ground. Bogie type landing gear may include a shock strut assembly and an elongated bogie beam that supports one or more pairs of wheels. Axles for carrying the wheels are indirectly coupled to the bogie beam by an axle plug and axle retention spool. Using the axle plug and axle retention spool to couple the axle with the bogie beam undesirably adds weight, cost, and part count to a bogie beam assembly.

EP 2635490A1 describes a landing gear bogie beam with a jacking dome. EP 2663490 A1 describes a landing gear assembly.

### SUMMARY

A landing gear is provided according to various embodiments. The landing gear comprises a shock strut assembly and a bogie beam assembly coupled to the shock strut assembly. The bogie beam assembly comprises a bogie beam, an axle, and at least one retention bolt. The bogie beam comprises an elongated main body portion having an end portion disposed between a forward sleeve portion and an aft sleeve portion that are transverse to the elongated main body portion. The axle extends through the forward sleeve portion, the end portion, and the aft sleeve portion. The at least one retention bolt is secured through at least one of forward sleeve portion and the axle and the aft sleeve portion and the axle.

A method is provided for coupling an axle to a bogie beam of a landing gear according to various embodiments. The method comprises inserting an axle to extend through a forward sleeve portion, an end portion, and an aft sleeve portion of the bogie beam. The bogie beam comprises an elongated main body portion having the end portion disposed between the forward sleeve portion and the aft sleeve portion that are transverse to the elongated body portion. At least one retention bolt is inserted and secured, in a direction normal to a longitudinal axis of the axle, through at least one of the forward sleeve portion and the axle and the aft sleeve portion and the axle.

In any of the foregoing embodiments, the axle extends beyond the forward sleeve portion to define an exposed forward axle portion and beyond the aft sleeve portion to define an exposed aft axle portion. The retention bolt extends and is secured in a direction normal to a longitudinal axis of the axle. The bogie beam is generally I-shaped. The forward and aft sleeve portions each include a bore for the axle. An inner surface of the forward sleeve portion and the aft sleeve portion surrounds an outer surface of the axle. The retention bolt transfers axial loads from the axle and directly into the bogie beam.

### BRIEF DESCRIPTION OF THE DRAWINGS

The drawings described herein are for illustration purposes only and are not intended to limit the scope of the present disclosure in any way. The present disclosure will become more fully understood from the detailed description and the accompanying drawings, wherein like numerals denote like elements.
FIG. 1 is an isometric view of an exemplary landing gear according to various embodiments;
FIG. 2 is a fragmented isometric view of a portion of a bogie beam assembly of various embodiments, illustrating a single retention bolt secured through aligned openings in an aft sleeve portion of a bogie beam and an axle for coupling the axle to the bogie beam;
FIG. 3 is an enlarged, fragmented isometric view of a portion of a bogie beam assembly of various embodiments, illustrating a first retention bolt secured through aligned openings in a forward sleeve portion of a bogie beam and an axle and a second retention bolt secured through aligned openings in an aft sleeve portion of the bogie beam and the axle for coupling the axle to the bogie beam;
FIG. 4 is a fragmented sectional view of a portion of the bogie beam assemblies of FIGS. 2 and 3, illustrating an aft sleeve portion of the bogie beam with the retention bolt extending and secured in a direction normal to the axle through aligned openings in the aft sleeve portion and the axle; and
FIG. 5 is a flowchart illustrating an exemplary method for coupling the axle to the bogie beam of the landing gear in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration and its best mode, and not of limitation. While these exemplary embodiments are described in sufficient detail to enable those skilled in the art to practice the invention, it should be understood that other embodiments may be realized and that logical, chemical and mechanical changes may be made without departing from the scope of the invention defined in the claims. For example, the steps recited in any of the method or process descriptions may be executed in any order and are not necessarily limited to the order presented. Moreover, many of the functions or steps may be outsourced to or performed by one or more third parties.

In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Various embodiments are directed to a landing gear including a bogie beam assembly and method for coupling an axle to a bogie beam thereof. Various embodiments as described in the present disclosure reduce weight, cost, and part count of the landing gear and bogie beam assembly thereof over conventional landing gear and conventional bogie beam assemblies using a straight elongated bogie beam and a plug and/or axle retention spool between the axle and the bogie beam for coupling the axle and bogie beam together, undesirably adding weight, cost, and part count to the landing gear and bogie beam assembly thereof.

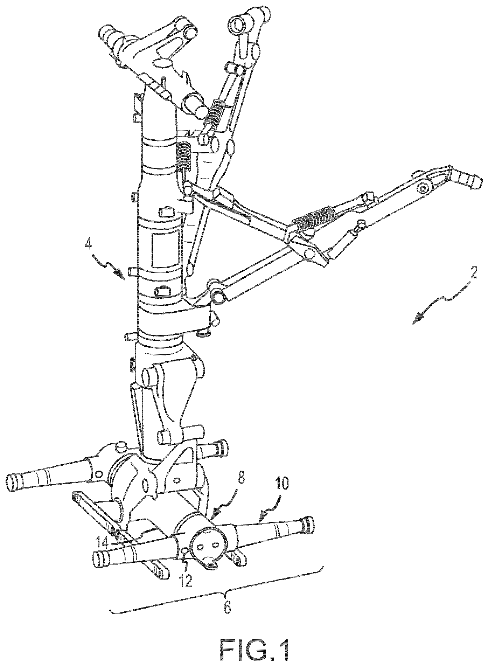

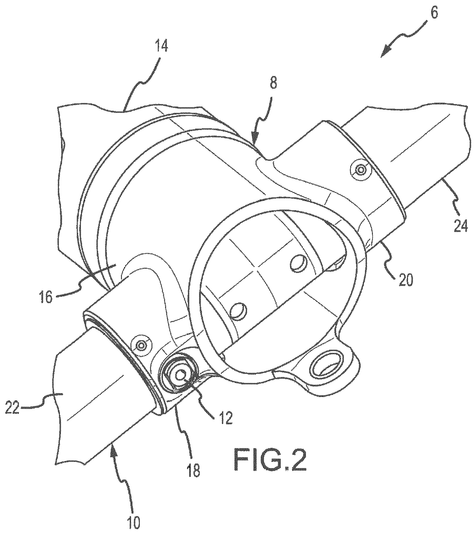

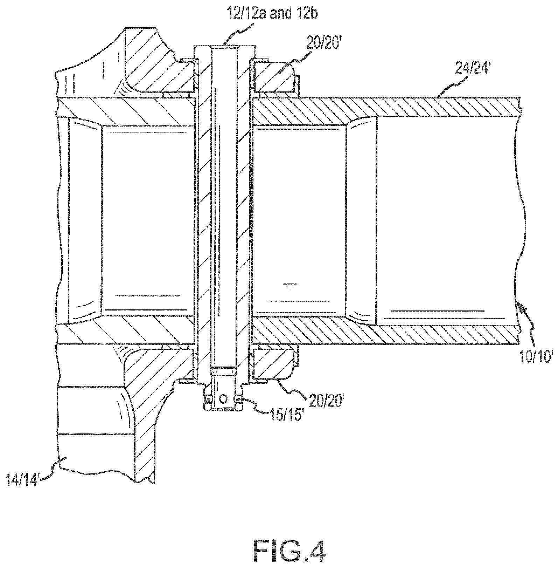

Referring now to FIG. 1, a landing gear 2 according to various embodiments is depicted. As depicted in FIG. 1, the landing gear 2 for aircraft generally comprises a shock strut assembly 4 coupled to a bogie beam assembly 6. Still referring to FIG. 1 and now to FIG. 2, the bogie beam assembly 6, of various embodiments, generally comprises a bogie beam 8, an axle 10 for carrying wheels, and at least one retention bolt 12 for directly coupling the axle 10 to the bogie beam 8. FIGS. 1 and 2 depict a single retention bolt. It is to be understood that the number of retention bolts may vary from other than depicted and additional retention bolts may be used. The at least one retention bolt 12 may be secured by a nut 15 (FIG. 4) or the like.

Still referring to FIGS. 1 and 2 and now to FIG. 4, according to various embodiments, the bogie beam 8 comprises an elongated main body portion 14 having an end portion 16 disposed between a forward sleeve portion 18 and an opposing aft sleeve portion 20 that are transverse to the elongated main body portion 14. The bogie beam 8 according to various embodiments may be generally I-shaped. The forward sleeve portion 18 and the aft sleeve portion 20 each include a bore for receiving the axle 10 as hereinafter described.

The axle 10 extends through the forward sleeve portion 18, the end portion 16, and the aft sleeve portion 20. The axle 10 is configured for carrying at least one pair of wheels of the landing gear 2. The axle 10 extends beyond the forward sleeve portion 18 to define an exposed forward axle portion 22 and beyond the aft sleeve portion 20 to define an exposed aft axle portion 24. An inner surface of the forward sleeve portion 18 and the aft sleeve portion 20 directly contact an outer surface of the axle 10 (i.e., there is no intervening plug and/or axle retention spool between the axle and the bogie beam as in a conventional landing gear and bogie beam assembly). The retention bolt 12 is depicted in FIG. 4 as being secured through the aft sleeve portion 24 and the axle 10.

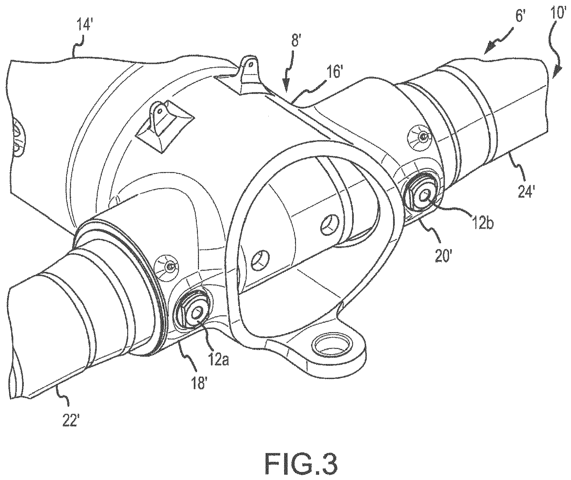

FIG. 3 illustrates a bogie beam assembly 6' in accordance with various embodiments. Bogie beam assembly 6' comprises a bogie beam 8', an axle 10' for carrying wheels, and at least one retention bolt 12a and 12b for directly coupling the axle 10' to the bogie beam 8'. The at least one retention bolt 12a and 12b may be secured by a nut 15' (FIG. 4) or the like.

Bogie beam 8' comprises an elongated main body portion 14' having an end portion 16' disposed between a forward sleeve portion 18' and an opposing aft sleeve portion 20' that are transverse to the elongated main body portion 14'. The bogie beam 8' according to various embodiments may be generally I-shaped. The forward sleeve portion 18' and the aft sleeve portion 20' each include a bore for receiving the axle 10' as hereinafter described. The axle 10' extends through the forward sleeve portion 18', the end portion 16', and the aft sleeve portion 20'. The axle 10' is configured for carrying at least one pair of wheels of the landing gear. The axle 10' extends beyond the forward sleeve portion 18' to define an exposed forward axle portion 22' and beyond the aft sleeve portion 20' to define an exposed aft axle portion 24'. An inner surface of the forward sleeve portion 18' and the aft sleeve portion 20' directly contact an outer surface of the axle 10' (i.e., there is no intervening plug and/or axle retention spool between the axle and the bogie beam as in a conventional landing gear and bogie beam assembly). FIG. 3 depicts a first retention bolt 12a and a second retention bolt 12b. The first retention bolt 12a is secured through the forward sleeve portion 18' and the axle 10' and the second retention bolt 12b is secured through the aft sleeve portion 20' and the axle 10' (see also FIG. 4). While first and second retention bolts 12a and 12b are depicted, it is to be understood that a fewer (e.g., FIGS 1 and 2) or a greater number of retention bolts may be used to directly couple the axle 10' to the bogie beam 8'.

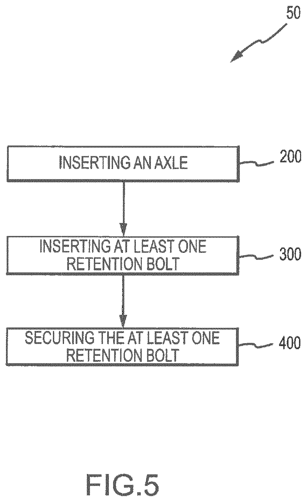

Referring now to FIG. 5, according to various embodiments, a method 50 for coupling the axle to the bogie beam of the landing gear begins by inserting the axle to extend through the forward sleeve portion, the end portion, and the aft sleeve portion of the bogie beam (step 200). Still referring to FIG. 5, according to various embodiments, the method 50 for coupling the axle to the bogie beam of the landing gear 2 continues by inserting (step 300) and securing (step 400) the at least one retention bolt through at least one of the forward sleeve portion and the axle and the aft sleeve portion and the axle. The at least one retention bolt is inserted in a direction normal (perpendicular) to the longitudinal axis of the axle as depicted in FIG. 4. The at least one retention bolt may be secured by a nut or the like.

As the at one least one retention bolt 12/12a and 12b is inserted and secured in a direction normal to the longitudinal axis of the axle and to the transverse forward sleeve portion 18/18' and transverse aft sleeve portion 20/20', the axial loads are transferred directly from the axle 10/10' directly to the bogie beam 8/8', rather than from the axle to an intervening axle plug and/or axle retention spool and then to the bogie beam as in a conventional bogie beam assembly. The axle 10/10' is directly coupled to the bogie beam 8/8' with the axle directly contacting the bogie beam.

The landing gear 2 and the bogie beam assembly 6/6' described in the present disclosure provide weight, cost, and part count advantages over a conventional landing gear including a conventional bogie beam assembly using an axle plug and/or axle retention spool to retain or couple the axle to the bogie beam.

## Claims

1. A landing gear comprising:
a shock strut assembly (4); and
a bogie beam assembly (6, 6') coupled to the shock strut assembly (4), the bogie beam assembly (6,6') comprising a bogie beam (8, 8') comprising an elongated main body portion (14, 14') having an end portion (16, 16') disposed between a forward sleeve portion (18, 18') and an aft sleeve portion (20, 20') that are transverse to the elongated main body portion; and an axle (10, 10') extending through the forward sleeve portion (18, 18'), the end portion (16, 16'), and the aft sleeve portion (20, 20'); **characterised by** the bogie beam assembly (6, 6') further comprising at least one retention bolt (12, 12a, 12b) secured through at least one of:
the forward sleeve portion (18, 18') and the axle; and
the aft sleeve portion (20, 20') and the axle (10, 10').

2. The landing gear of claim 1, wherein the axle (10, 10') extends beyond the forward sleeve portion (18, 18') to define an exposed forward axle portion and beyond the aft sleeve portion (20, 20') to define an exposed aft axle portion.

3. The landing gear of claim 1 or 2, wherein the at least one retention bolt (12, 12a, 12b) extends in a direction normal to a longitudinal axis of the axle (10, 10').

4. The landing gear of claim 3, wherein the at least one retention bolt (12, 12a, 12b) is secured in a direction normal to a longitudinal axis of the axle.

5. The landing gear of any preceding claim, wherein the at least one retention bolt (12, 12a, 12b) comprises a first retention bolt secured through the forward sleeve portion and the axle (10, 10') and a second retention bolt secured through the aft sleeve portion (20, 20') and the axle (10, 10').

6. The landing gear of any preceding claim, wherein the bogie beam (8, 8') is generally I-shaped.

7. The landing gear of any preceding claim, wherein the forward (18, 18') and aft sleeve portions (20, 20') each include a bore for the axle.

8. The landing gear of any preceding claim, wherein an inner surface of the forward sleeve portion (18, 18') and the aft sleeve portion (20, 20') surrounds an outer surface of the axle (10, 10').

9. The landing gear of any preceding claim, wherein the at least one retention bolt (12, 12a, 12b) transfers axial loads from the axle (10, 10') and directly into the bogie beam (8, 8').

10. A method for coupling an axle (10, 10') to a bogie beam (8, 8') of a landing gear, the method comprising:
inserting the axle (10, 10') to extend through a forward sleeve portion (18, 18'), an end portion, and an aft sleeve portion (20, 20') of the bogie beam (8, 8'), the bogie beam (8, 8') comprising an elongated main body portion (14, 14') having the end portion disposed between the forward sleeve portion (18, 18') and the aft sleeve portion (20, 20') that are transverse to the elongated main body portion (14, 14'); and **characterized by**
inserting and securing at least one retention bolt (12, 12a, 12b), in a direction normal to a longitudinal axis of the axle (10, 10'), through at least one of:
the forward sleeve portion (18, 18') and the axle (10, 10'); and
the aft sleeve portion (20, 20') and the axle (10, 10').

11. The method of claim 10, wherein inserting the axle (10, 10') comprises inserting the axle (10, 10') to extend beyond the forward sleeve portion (18, 18') to define an exposed forward axle portion and beyond the aft sleeve portion (20, 20') to define an exposed aft axle portion.

12. The method of claim 10 or 11, wherein inserting and securing the at least one retention bolt (12, 12a, 12b) results in direct coupling of the axle (10, 10') with the bogie beam (8, 8') with the axle (10, 10') directly contacting the bogie beam (8, 8').

13. The method of any of claims 10 to 12, wherein inserting and securing the at least one retention bolt (12, 12a, 12b) in the direction normal to the longitudinal axis of the axle transfers axial loads from the axle and directly into the bogie beam (8, 8').

## Patentansprüche

1. Fahrwerk, umfassend:
eine Federbeinanordnung (4); und
eine Drehgestellträgeranordnung (6, 6'), die an die Federbeinanordnung (4) gekoppelt ist,
wobei die Drehgestellträgeranordnung (6, 6') einen Drehgestellträger (8, 8') umfasst, der einen länglichen Hauptkörperabschnitt (14, 14') umfasst, der einen Endabschnitt (16, 16') aufweist, der zwischen einem vorderen Hüllenabschnitt (18, 18') und einem hinteren Hüllenabschnitt (20, 20'), die quer zu dem länglichen Hauptkörperabschnitt sind, angeordnet ist; und
eine Achse (10, 10'), die sich durch den vorderen Hüllenabschnitt (18, 18'), den Endabschnitt (16, 16') und den hinteren Hüllenabschnitt (20, 20') erstreckt, **dadurch gekennzeichnet, dass** die Drehgestellträgeranordnung (6, 6') ferner Folgendes umfasst:
mindestens einen Haltebolzen (12, 12a, 12b), der durch mindestens eines von Folgendem befestigt ist:
den vorderen Hüllenabschnitt (18, 18') und die Achse; und
den hinteren Hüllenabschnitt (20, 20') und die Achse (10, 10').

2. Fahrwerk nach Anspruch 1, wobei sich die Achse (10, 10') über den vorderen Hüllenabschnitt (18, 18') hinaus, um einen exponierten vorderen Achsenabschnitt zu definieren, und über den hinteren Hüllenabschnitt (20, 20') hinaus, um einen exponierten hinteren Achsenabschnitt zu definieren, erstreckt.

3. Fahrwerk nach Anspruch 1 oder 2, wobei sich der mindestens eine Haltebolzen (12, 12a, 12b) in eine Richtung senkrecht zu einer Längsachse der Achse (10, 10') erstreckt.

4. Fahrwerk nach Anspruch 3, wobei der mindestens eine Haltebolzen (12, 12a, 12b) in einer Richtung senkrecht zu einer Längsachse der Achse befestigt ist.

5. Fahrwerk nach einem vorhergehenden Anspruch, wobei der mindestens eine Haltebolzen (12, 12a, 12b) einen ersten Haltebolzen, der durch den vorderen Hüllenabschnitt und die Achse (10, 10') befestigt ist, und einen zweiten Haltebolzen, der durch den hinteren Hüllenabschnitt (20, 20') und die Achse (10, 10') befestigt ist, umfasst.

6. Fahrwerk nach einem vorhergehenden Anspruch, wobei der Drehgestellträger (8, 8') im Allgemeinen I-förmig ist.

7. Fahrwerk nach einem vorhergehenden Anspruch, wobei der vordere (18, 18') und hintere Hüllenabschnitt (20, 20') jeweils eine Bohrung für die Achse beinhaltet.

8. Fahrwerk nach einem vorhergehenden Anspruch, wobei eine Innenfläche des vorderen Hüllenabschnitts (18, 18') und des hinteren Hüllenabschnitts (20, 20') eine Außenfläche der Achse (10, 10') umgibt.

9. Fahrwerk nach einem vorhergehenden Anspruch, wobei der mindestens eine Haltebolzen (12, 12a, 12b) Axialkräfte von der Achse (10, 10') und direkt in den Drehgestellträger (8, 8') überträgt.

10. Verfahren zur Kopplung einer Achse (10, 10') an einem Drehgestellträger (8, 8') eines Fahrwerks, wobei das Verfahren Folgendes umfasst:
Einfügen der Achse (10, 10') zum Erstrecken durch einen vorderen Hüllenabschnitt (18, 18'), einen Endabschnitt und einen hinteren Hüllenabschnitt (20, 20') des Drehgestellträgers (8, 8'), wobei der Drehgestellträger (8, 8') einen länglichen Hauptkörperabschnitt (14, 14') umfasst, dessen Endabschnitt zwischen dem vorderen Hüllenabschnitt (18, 18') und dem hinteren Hüllenabschnitt (20, 20'), die quer zu dem länglichen Hauptkörperabschnitt (14, 14') sind, angeordnet ist; und
**gekennzeichnet durch**:
Einfügen und Befestigen mindestens eines Haltebolzens (12, 12a,
12b) in einer Richtung senkrecht zu einer Längsachse der Achse (10, 10') durch mindestens eines von Folgendem:
den vorderen Hüllenabschnitt (18, 18') und die Achse (10, 10') ; und
den hinteren Hüllenabschnitt (20, 20') und die Achse (10, 10').

11. Verfahren nach Anspruch 10, wobei das Einfügen der Achse (10, 10') das Einfügen der Achse (10, 10') zum Erstrecken über den vorderen Hüllenabschnitts (18, 18') hinaus, um einen exponierten vorderen Achsenabschnitt zu definieren, und über den hinteren Hüllenabschnitt (20, 20') hinaus, um einen exponierten hinteren Achsenabschnitt zu definieren, umfasst.

12. Verfahren nach Anspruch 10 oder 11, wobei das Einfügen und Befestigen des mindestens einen Haltebolzens (12, 12a, 12b) zu einer direkten Kopplung der Achse (10, 10') an dem Drehgestellträger (8, 8') führt, wobei die Achse (10, 10') den Drehgestellträger (8, 8') direkt kontaktiert.

13. Verfahren nach einem der Ansprüche 10 bis 12, wobei das Einfügen und Befestigen des mindestens einen Haltebolzens (12, 12a, 12b) in der Richtung senkrecht zu der Längsachse der Achse Axialkräfte von der Achse und direkt in den Drehgestellträger (8, 8') überträgt.

## Revendications

1. Train d'atterrissage comprenant :
un ensemble amortisseur (4) ; et
un ensemble balancier de bogie (6, 6') couplé à l'ensemble amortisseur (4), l'ensemble balancier de bogie (6, 6') comprenant un balancier de bogie (8, 8') comprenant une partie corps principal allongée (14, 14') ayant une partie extrémité (16, 16') disposée entre une partie manchon avant (18, 18') et une partie manchon arrière (20, 20') qui sont transversales à la partie corps principal allongée ; et
un essieu (10, 10') s'étendant à travers la partie manchon avant (18, 18'), la partie extrémité (16, 16'), la partie manchon arrière (20, 20') ; **caractérisé en ce que** l'ensemble balancier de bogie (6, 6') comprend en outre au moins un boulon de retenue (12, 12a, 12b) fixé à travers au moins l'un de :
la partie manchon avant (18, 18') et l'essieu ; et
la partie manchon arrière (20, 20') et l'essieu (10, 10').

2. Train d'atterrissage selon la revendication 1, dans lequel l'essieu (10, 10') s'étend au-delà de la partie manchon avant (18, 18') pour définir une partie essieu avant exposée et au-delà de la partie manchon arrière (20, 20') pour définir une partie essieu arrière exposée.

3. Train d'atterrissage selon la revendication 1 ou 2, dans lequel l'au moins un boulon de retenue (12, 12a, 12b) s'étend dans une direction normale à un axe longitudinal de l'essieu (10, 10').

4. Train d'atterrissage selon la revendication 3, dans lequel l'au moins un boulon de retenue (12, 12a, 12b) est fixé dans une direction normale à un axe longitudinal de l'essieu.

5. Train d'atterrissage selon une quelconque revendication précédente, dans lequel l'au moins un boulon de retenue (12, 12a, 12b) comprend un premier boulon de retenue fixé à travers la partie manchon avant et l'essieu (10, 10') et un second boulon de retenue fixé à travers la partie manchon arrière (20, 20') et l'essieu (10, 10').

6. Train d'atterrissage selon une quelconque revendication précédente, dans lequel le balancier de bogie (8, 8') est généralement en forme de I.

7. Train d'atterrissage selon une quelconque revendication précédente, dans lequel les parties manchons avant (18, 18') et arrière (20, 20') incluent chacune un alésage pour l'essieu.

8. Train d'atterrissage selon une quelconque revendication précédente, dans lequel une surface interne de la partie manchon avant (18, 18') et de la partie manchon arrière (20, 20') entoure une surface externe de l'essieu (10, 10').

9. Train d'atterrissage selon une quelconque revendication précédente, dans lequel l'au moins un boulon de retenue (12, 12a, 12b) transfère les charges axiales depuis l'essieu (10, 10') et directement dans le balancier de bogie (8, 8').

10. Procédé de couplage d'un essieu (10, 10') à un balancier de bogie (8, 8') d'un train d'atterrissage, le procédé comprenant :
l'insertion de l'essieu (10, 10') de sorte à ce qu'il s'étende à travers une partie manchon avant (18, 18'), une partie extrémité, et une partie manchon arrière (20, 20') du balancier de bogie (8, 8'), le balancier de bogie (8, 8') comprenant une partie corps principal allongée (14, 14') ayant la partie extrémité disposée entre la partie manchon avant (18, 18') et la partie manchon arrière (20, 20') qui sont transversales à la partie corps principal allongée (14, 14') ;
et **caractérisé par**
l'insertion et la fixation d'au moins un boulon de retenue (12, 12a, 12b), dans une direction normale à un axe longitudinal de l'essieu (10, 10'), à travers au moins l'un de :
la partie manchon avant (18, 18') et l'essieu (10, 10') ; et
la partie manchon arrière (20, 20') et l'essieu (10, 10').

11. Procédé selon la revendication 10, dans lequel l'insertion de l'essieu (10, 10') comprend l'insertion de l'essieu (10, 10') de sorte à ce qu'il s'étende au-delà de la partie manchon avant (18, 18') pour définir une partie essieu avant exposée et au-delà de la partie manchon avant (20, 20') pour définir une partie essieu arrière exposée.

12. Procédé selon la revendication 10 ou 11, dans lequel l'insertion et la fixation de l'au moins un boulon de retenue (12, 12a, 12b) provoque un couplage direct de l'essieu (10, 10') avec le balancier de bogie (8, 8') où l'essieu (10, 10') est directement en contact avec le balancier de bogie (8, 8').

13. Procédé selon l'une quelconque des revendications 10 à 12, dans lequel l'insertion et la fixation de l'au moins un boulon de retenue (12, 12a, 12b) dans la direction normale à l'axe longitudinal de l'essieu transfère les charges axiales depuis l'axe et directement dans le balancier de bogie (8, 8').
